# EUROPEAN PATENT SPECIFICATION

(11) **EP 0 897 831 B1**
(45) Date of publication and mention of the grant of the patent: **28.03.2001**
(21) Application number: 98830425.9
(22) Date of filing: 15.07.1998
(51) Int. Cl.: B60R 1/06

(54) **Motor-vehicle outer rear view mirror having a shape memory actuating device**
Aussenrückblickspiegel für Kraftfahrzeuge mit Formgedächtnisbetätigungsorgan
Rétroviseur extérieur pour véhicules avec actionneur à effet mémoire

(30) Priority: 01.08.1997 IT TO970699
(43) Date of publication of application: 24.02.1999
(73) Proprietor: C.R.F. Società Consortile per Azioni, 10043 Orbassano (TO) (IT)
(72) Inventor: Butera, Francesco, Strada Torino 50, 10043 Orbassano,Torino (IT)
(74) Representative: Notaro, Giancarlo

(56) References cited:
- EP-A- 0 173 433
- EP-A- 0 405 773
- GB-A- 2 135 947
- US-A- 4 626 085
- PATENT ABSTRACTS OF JAPAN vol. 097, no. 005, 30 May 1997 & JP 09 011794 A (MURAKAMI KAIMEIDOU:KK), 14 January 1997
- PATENT ABSTRACTS OF JAPAN vol. 097, no. 003, 31 March 1997 & JP 08 310301 A (MURAKAMI KAIMEIDOU:KK), 26 November 1996
- PATENT ABSTRACTS OF JAPAN vol. 016, no. 471 (M-1318), 30 September 1992 & JP 04 169345 A (HONDA MOTOR CO LTD;OTHERS: 01), 17 June 1992
- PATENT ABSTRACTS OF JAPAN vol. 011, no. 175 (M-596), 5 June 1987 & JP 62 006847 A (ICHIKOH IND LTD), 13 January 1987
- PATENT ABSTRACTS OF JAPAN vol. 010, no. 200 (M-498), 12 July 1986 & JP 61 044045 A (MATSUYAMA SEISAKUSHO:KK;OTHERS: 01), 3 March 1986

## Description

The present invention relates to motor-vehicle outer rear view mirrors, of the type indicated in the pre-characterising portion of Claim 1. A mirror of this type is known from EP-A-0173433.

The object of the present invention is that of providing a mirror of the above indicated type which is provided with an adjusting system of the above indicated type ensuring that the reflective plate is firmly held in the adjusted position and having a fast and noiseless operation.

According to the invention, this object is achieved by providing a mirror as set forth in Claim 1.

The invention will be now described with reference to the annexed drawings, given purely by way of non limiting example, in which:
figure **1** is a rear perspective view of the main elements of an outer rear view mirror corresponding in principle to the art known from EP-A-173433,
figure **2** is an exploded perspective view of the details shown in figure 1,
figure **3** is an exploded perspective view of a rear view mirror according to the invention,
figure **4** shows a detail of figure 3 at an enlarged scale, and
figure **5** is a view in cross-section and at an enlarged scale of a detail of figure 3.

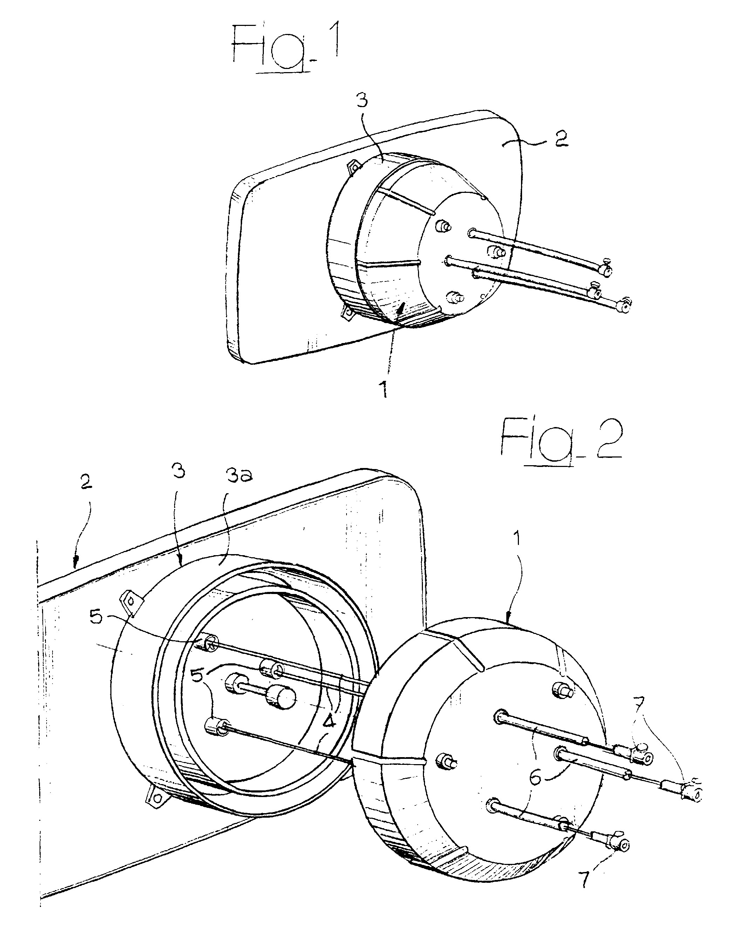

In figure 1, reference numeral 1 generally designates a supporting element which is to be secured, in a way known per se to the supporting structure of the outer rear view mirror of a motor-vehicle. In figure 1, for sake of clarity, the outer casing of the mirror has not been shown, so as to clearly show the inner parts and specifically the supporting element 1 and the reflective plate carried thereby. This plate is indicated by reference numeral 2 and is shown in figure 1 as viewed from the rear, i.e. with its reflective surface arranged on the side which is not visible in the figure.

The details of construction of the connection of the supporting element 1 to the mirror supporting structure, as well as the connection of the reflective plate 2 to the supporting element 1 are not described and shown herein, since these details can be made in any known way and they do not fall, taken alone, within the scope of the present invention. Furthermore, the elimination of these details from the drawings renders the latter easier and simpler to understand. The to the outer rear view mirror is provided, as in the conventional art, with a reflective plate 2 which is swivelly mounted on the supporting element 1. More precisely, the reflective plate 2 is carried by a body 3 which is swivelly mounted on the supporting element 1. The body 3 has an outer cylindrical wall 3a and a bottom wall 3b.

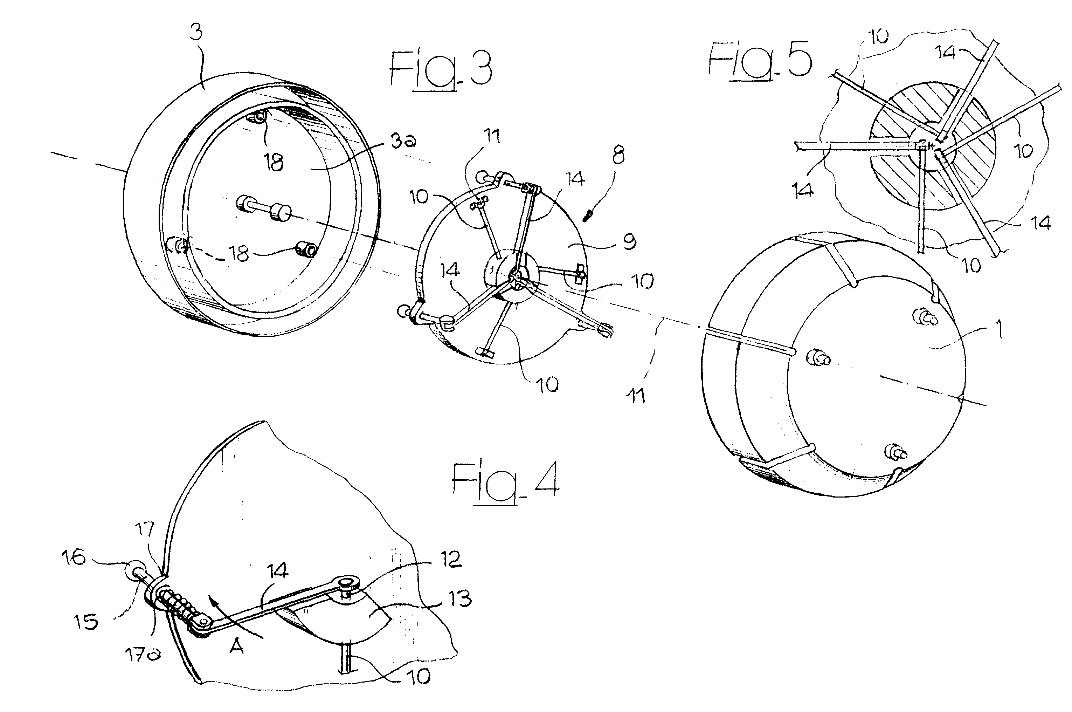

In the known embodiment shown in figures 1, 2, between the bottom wall 3b of the body 3 carrying the reflective plate 2 and the supporting element 1 there are interposed three wires 4 constituted by a shape memory metal alloy, directed substantially perpendicularly to the plane of the reflective plate 2. When referring to the wires 4 interposed between the plate carrying body 3 and the supporting element 1 in the present description and in the following claims an operative connection of each wire to said two elements is meant such that a shortening of the wire causes a corresponding change of the position of the plate 2 relative to the supporting element 1. In the illustrated example, this result is obtained since each wire 4 has one end connected to a clamp 5 carried by the body 3, the wire also being arranged through a respective hole formed in the supporting element 1 and through sheath 6 associated with said hole. The end of each wire 4 opposite to the clamp 5 is connected to a respective clamp 7 which is to be secured to a wall of the fixed supporting structure of the mirror (not visible in the drawing). Therefore, the arrangement is such that a shortening of one of the wires 4 causes a corresponding rotation of the reflective plate 2 around the center of the swivel connection of body 3 to the supporting element 1.

As already indicated, the wires 4 are constituted by a shape memory metal alloy. The wires constituted by shape memory metal alloy, typically nickel and titanium alloys, have been known for a long time and have been described in the technical literature. When a predetermined transition temperature is reached, such as in the order of 100°C, they have a contraction and their length decreases.

It is to be noted that the use of wires constituted by a shape memory metal alloy in order to control the position of an articulated member, specifically a rear view mirror for a motor-vehicle, is already known for example from EP-A-0 173 433.

Naturally, the clamps 5, 7 are connected to electric supply means which are adapted to supply electric current selectively to one or more of the three wires 4. The electric connection means, as well as the means for controlling the electric supply are not described herein since, again, also these elements can be made in any known way and do not fall, taken alone, within the scope of the invention. An indication in this respect can be found for example in the above mentioned EP-A-0 173 433. For this reason, simplified drawings have been submitted herein, for sake of clarity.

Figure 3-5 show the present invention. In these figures, the parts in common to those of figures 1, 2 have been indicated by the same reference numeral. In this case, with the supporting element 1 there is associated an actuating device 8 comprising a wall 9, which in the illustrated example has a circular shape, lying in a plane substantially parallel to the plane of the reflective plate and the bottom wall 3a of the body 3, which is secured to the supporting element 1. The wall 9 supports three torsion bars 10 constituted by a shape memory metal alloy arranged substantially according to radial directions with respect to the central axis 11 orthogonal to the plane of the mirror. Each torsion bar 10 has one end 11 secured by means of a bracket to the wall 9 and the opposite end 12 which extends through a hub 13 (figure 4) of the disk-like wall 9 and projects inside thereof. At the end 12 there is secured one lever 14, which is to be rotated around the axis of the respective torsion bar 10 when the latter is deformed. The opposite end of each lever 14 is pivotally connected to a tie-rod 15 which extends through a guiding hole 16 formed in an ear 17 of the disk-like wall 9. The tie-rod 15 ends with an enlarged end 16 which is to be swivelly connected to a respective seat 18 carried by the bottom wall 3a of the body 3 carrying the reflective plate. To each tie-rod 15 there is associated a helical spring 19 which applies a load to the respective torsion bar 10 so as to bias this bar to its undeformed rest condition when the supply of current is interrupted. Again, also in the case of the embodiment of figures 3-4, the drawings do not show the means for connecting the torsion bars 10 to the electric supply and the means for controlling the supply to bars 10. As already indicated, these details have not been shown since they can be made in any known way and since they do not fall, taken alone, within the scope of the invention.

When electric current is passed through one of the bars 10, the latter undergoes a torsion deformation, as a result of its shape memory, causing a corresponding rotation of the respective lever 14 around the axis of bar 10. The rotation of lever 14, such as in the direction of arrow A in figure 4, causes a corresponding movement of rod 15, against the action of spring 19. This movement causes a corresponding movement of the reflective plate relative to the supporting element 1. When the electric supply is interrupted, the spring 19 rapidly returns the bar 10 towards its rest condition. By controlling the electric supply to the three bars 10, it is possible to drive any movement of the mirror.

Naturally, while the principle of the invention remains the same, the details of construction and the embodiments may widely vary with respect to what has been described and illustrated purely by way of example, without departing from the scope of the present invention.

## Claims

1. Motor-vehicle outer rear view mirror, comprising:
a supporting element (1),
a body (3) carrying a reflective plate (2), swivelly mounted onto the supporting element (1), and
remote control means of the position of the plate-carrying body (3) relative to the supporting element (1), including three elements constituted by a shape memory metal alloy, operatively interposed between the supporting element (1) and the plate-carrying body (3) and adapted to be activated by a passage of electric current to cause a variation of the position of the reflective plate (2) relative to the supporting element (1),
characterized in that said shape memory elements are three torsion bars (10) carried by the supporting element (1) and directed substantially along radial directions in a plane substantially parallel to the plane of the reflective plate (2), each torsion bar (10) having one outer end connected to the supporting element (1) and the opposite inner end connected to the reflective plate (2) by a lever transmission (14, 15),
in that said lever transmission comprises a first lever (14) extending radially in the above mentioned plane and orthogonally to the axis of the respective torsion bar, said first lever having one end rigidly connected to the radially inner end (12) of the respective torsion bar (10), so as to be rotated around the axis of the torsion bar when the latter is deformed, and being articulated at the opposite end to a rod (15), said rod (15) being directed perpendicularly to the reflective plate (2) and being slidably mounted within a guiding hole (16) of the supporting element (1), and
in that with each lever transmission (14, 15) there are associated spring means (19) tending to return the respective torsion bar (10) towards its undeformed condition.

2. Mirror according to claim 1, characterized in that the torsion bars (10) and the lever transmissions (14, 15) are carried by a supporting wall (9) of an actuating device (8) which is secured to the supporting element (1).

3. Mirror according to claim 2, characterized in that said supporting wall is in form of a circular disk (9) and in that each torsion bar has its outer end (11) secured to said disk (9) by means of a bracket and its inner end (12) extending through a central hub (13) of said disk (9) and projecting inwardly therefrom, the respective first lever (14) being arranged through a radial slot formed in said hub (13), the respective rod (15) being slidably mounted within a hole formed in said disk(9), said spring means including a helical spring (19) mounted around each rod (15) and interposed between said disk (9) and one end of the rod (15).

## Patentansprüche

1. Kraftfahrzeug-Außenrückspiegel, welcher aufweist:
ein Trägerelement (1),
einen Körper (3), welcher eine Reflexionsplatte (2) trägt, die am Trägerelement (1) schwenkbar befestigt ist, und
eine Einrichtung zur Fernsteuerung der Position des Plattenträgerkörpers (3) relativ zum Trägerelement (1), welche drei aus einer Formgedächtnis-Metallegierung bestehende Elemente beinhaltet, die funktionell zwischen dem Trägerelement (1) und dem Plattenträgerkörper (3) liegen und aktiviert werden können, indem sie von einem elektrischen Strom durchflossen werden, der eine Änderung der Position der Reflexionsplatte (2) relativ zum Trägerelement (1) hervorruft,
dadurch gekennzeichnet, dass
die Formgedächtnis-Elemente drei Torsionsstäbe (10) sind, die durch das Trägerelement (1) gehaltert sind und im wesentlichen in radialer Richtung und in einer Ebene im wesentlichen parallel zur Ebene der Reflexionsplatte (2) verlaufen, wobei das äußere Ende jedes Torsionsstabs (10) mit dem Trägerelement (1) verbunden ist und das entgegengesetzte innenliegende Ende über eine Hebelübertragung (14, 15) mit der Reflexionsplatte (2) verbunden ist,
die Hebelübertragung einen ersten Hebel (14) aufweist, der sich in radialer Richtung in der oben erwähnten Ebene und senkrecht zur Achse des jeweiligen Torsionsstabes erstreckt, wobei das eine Ende des ersten Hebels mit dem in radialer Richtung innenliegenden Ende (12) des jeweiligen Torsionsstabes (10) starr verbunden ist, so dass es sich um die Achse des Torsionsstabes dreht, wenn dieser deformiert wird, und mit dem entgegengesetzten Ende mit einer Stange (15) gelenkig verbunden ist, wobei die Stange (15) senkrecht zur Reflexionsplatte (2) ausgerichtet ist und in einem Führungsloch (16) (richtig: 17a) des Trägerelements (1) gleitend angeordnet ist, und
zu jeder Hebelübertragung (14, 15) eine Federeinrichtung (19) gehört, die versucht, den jeweiligen Torsionsstab (10) in seinen undeformierten Zustand zurückzubewegen.

2. Spiegel nach Anspruch 1, dadurch gekennzeichnet, dass die Torsionsstäbe (10) und die Hebelübertragungen (14, 15) durch eine Trägerwandung (9) einer Betätigungsvorrichtung (8) gehaltert sind, welche am Trägerelement (1) befestigt ist.

3. Spiegel nach Anspruch 2, dadurch gekennzeichnet, dass die Trägerwandung die Form einer kreisförmigen Scheibe (9) hat und das äußere Ende (11) jedes Torsionsstabs an der Scheibe (9) mittels einer Klammer befestigt ist und sich dessen inneres Ende (12) durch eine in der Mitte befindliche Nabe (13) der Scheibe (9) erstreckt und in Innere von dieser hineinragt, wobei der erste Hebel (14) jeweils durch einen in der Nabe (13) ausgebildeten radialen Schlitz verläuft, die jeweilige Stange (15) in einem in der Scheibe (9) ausgebildeten Loch gleitend befestigt ist, und die Federeinrichtung eine Schraubenfeder (19) beinhaltet, die um jede Stange (15) herum montiert ist und sich zwischen der Scheibe (9) und dem einen Ende der Stange (15) befindet.

## Revendications

1. Rétroviseur extérieur de véhicule à moteur, comportant :
un élément de support (1),
un corps (3) portant une plaque réfléchissante (2), monté de façon oscillante sur l'élément de support (1), et
des moyens de commande à distance de la position du corps de support de plaque (3) par rapport à l'élément de support (1), comprenant trois éléments constitués par un alliage métallique à mémoire de forme, interposés de manière opérationnelle entre l'élément de support (1) et le corps de support de plaque (3) et prévus pour être activés par un passage de courant électrique afin de provoquer une variation de la position de la plaque réfléchissante (2) par rapport à l'élément de support (1),
caractérisé en ce que lesdits éléments à mémoire de forme sont trois barres de torsion (10) portées par l'élément de support (1) et orientées sensiblement le long de directions radiales dans un plan sensiblement parallèle au plan de la plaque réfléchissante (2), chaque barre de torsion (10) ayant une extrémité extérieure reliée à l'élément de support (1) et l'extrémité intérieure opposée reliée à la plaque réfléchissante (2) par une transmission à levier (14, 15),
en ce que ladite transmission à levier comporte un premier levier (14) qui s'étend radialement dans le plan mentionné ci-dessus et perpendiculairement à l'axe de la barre de torsion respective, ledit premier levier ayant une extrémité reliée rigidement à l'extrémité radialement intérieure (12) de la barre de torsion (10) respective, de façon à être entraîné en rotation autour de l'axe de la barre de torsion lorsque cette dernière est déformée, et qui est articulé à l'extrémité opposée sur une tige (15), ladite tige (15) étant dirigée perpendiculairement à la plaque réfléchissante (2) et étant monté de façon coulissante à l'intérieur d'un trou de guidage (16) de l'élément de support (1), et
en ce que des moyens de ressort (19) qui tendent à ramener la barre de torsion (10) respective vers sa condition non déformée sont associés à chaque transmission à levier (14, 15).

2. Rétroviseur selon la revendication 1, caractérisé en ce que les barres de torsion (10) et les transmissions à levier (14, 15) sont portées par une paroi de support (9) d'un dispositif d'actionnement (8) qui est fixé sur l'élément de support (1).

3. Rétroviseur selon la revendication 2, caractérisé en ce que ladite paroi de support est sous la forme d'un disque circulaire (9) et en ce que chaque barre de torsion a son extrémité extérieure (11) fixée sur ledit disque (9) au moyen d'un support et son extrémité intérieure (12) qui s'étend à travers un moyeu central (13) dudit disque (9) et qui dépasse vers l'intérieur depuis celui-ci, le premier levier (14) respectif étant disposé à travers une fente radiale formée dans ledit moyeu (13), la tige (15) respective étant montée de façon coulissante à l'intérieur d'un trou formé dans ledit disque (9), lesdits moyens de ressort comprenant un ressort hélicoïdal (19) monté autour de chaque tige (15) et interposé entre ledit disque (9) et une extrémité de la tige (15).
